# EUROPEAN PATENT APPLICATION

(11) **EP 4 044 288 A1**
(43) Date of publication of application: **17.08.2022**
(21) Application number: 20905523.5
(22) Date of filing: 30.11.2020
(51) Int. Cl.: H01M 4/485

(54) **POSITIVE ELECTRODE MATERIAL, PREPARATION METHOD THEREFOR, AND USE THEREOF**

(30) Priority: 26.12.2019 CN 201911366282
(71) Applicant: SVOLT ENERGY TECHNOLOGY CO., LTD, Changzhou, Jiangsu 213200 (CN)
(72) Inventor: ZHU, Jinxin, hangzhou, Jiangsu 213200 (CN); WANG, Pengfei, hangzhou, Jiangsu 213200 (CN)
(74) Representative: Novagraaf Technologies
(86) International application number: PCT/CN2020/132903
(87) International publication number: WO 2021/129319

(57) **Abstract**

Disclosed are a cathode material and a preparation method and an application thereof, wherein the cathode material has a general formula of Li₁₊ₐNi_{α}Co_{β}Mn_{γ}AlᵥX_{µ}M_{λ}O_{2-σ}F_{σ}, wherein 0≤a≤0.1, 0.75≤α<1, 0≤β<0.2, 0<γ<0.25, 0<ν≤0.05, 0<µ≤0.05, 0≤λ≤0.05, 0≤σ≤0.1, 1+a+α+β+γ+ν+µ+λ=1,|[K5] X is Nb or Ti, M is selected from at least one of Mg, Ti, Zr, Zn, Ca, B, Ce and Cr, and the cathode material has an α-NaFeO₂ layered structure and is assigned to an R-3m space group. The cathode material is monocrystal particle, and then the interfacial stress in crystal can be eliminated fundamentally, so as to become one of most potential cathode materials which are high in energy density and long in cycle life. The cathode material is jointly modified by anions and kations. As oxygen ions are partially replaced by fluorine ions and kations such as aluminum ions, niobium ions or titanium ions and M ions are introduced simultaneously, strengths of chemical bonds in the material are further enhanced. Through a test, the cathode material has advantages in rate data under a large current, and high power performance of a power lithium ion battery can be realized.|[K6]

## Description

### Technical Field

The disclosure belongs to the technical field of lithium ion batteries, in particular to a cathode material and a preparation method and an application thereof.

### Background

In recent years, electric automobiles and electric travels have aroused public concern worldwide, and major mainstream automobile enterprises and upstream power battery suppliers have made a lot of investment and layout in the field in succession. Under this tide, battery technologies have achieved rapid development. In the mainland region of China, stimulated by powerful electric automobile subsidy policies, many related enterprises grow quickly and expand, and take high energy density nickel cobalt lithium manganate (LiNiaCobMn_{(1-a-b)}O₂, LNCM) lithium ion batteries as an important development direction, commonly known as ternary NCM lithium batteries and corresponding ternary NCM cathode materials. At present, major ternary NCM cathode materials include LiNi_{0.5}Co_{0.2}Mn_{0.3}O₂(NCM523), LiNi_{0.6}Co_{0.2}Mn_{0.2}O₂(NCM622) and the like. Controlled by the demand on long endurance in the market, at present, a high nickel technical route of the ternary NCM cathode material is an inevitable choice to achieve the ternary NCM lithium ion battery with higher energy density. Under the background, some enterprises producing the cathode material have conducted development activities such as LiNi_{0.8}Co_{0.1}Mn_{0.1}O₂(NCM811) lab, pilot plant test and even mass production quickly. However, through a lot of test evaluations and loading actual measurements, it is found that the NCM811 lithium ion batteries have many problems, primarily including lower safety, shorter cycle life and the like. The significant reason which causes the problems is that instability of a crystal structure of a material is induced while the nickel content of the NCM811 cathode material is increased to obtain a high specific capacity. On that account, researchers have conducted a lot of optimization and modification tests, for example, doping, cladding of metal elements and the like. For example, side reactions between the surface of the material and an electrolyte in a charging and discharging cyclic process of the battery are reduced by surface cladding, thereby, the cyclic capacity retention ratio of the battery is improved. By doping the Al element, the electrochemical stability of the battery in the charging and discharging cyclic process is improved in light of an advantage of high strength of an Al-O chemical bond. Current researches are mainly focused on adoption of various measures to improve the structural stability of polycrystalline particles. However, the cathode material of the existing polycrystalline particles still has the problem of generating microcracks as the primary particle interfacial stress is out of control.

Therefore, there is still a space for further improvement of the existing cathode material.

### Summary

The present disclosure aims to at least solve one of the technical problems in the related art to a certain extent. Thus, one objective of the present disclosure aims to provide a cathode material and a preparation method and an application thereof. The cathode material without interfacial stress in crystals is high in safety and has high energy density, long cycle life and high rate capability.

In one aspect of the present disclosure, the present disclosure provides a cathode material. According to the embodiment of the present disclosure, the cathode material has a general formula of Li₁₊ₐNi_{α}Co_{β}Mn_{γ}Al_{ν}X_{µ}M_{λ}O_{2-σ}F_{σ}, wherein 0≤a≤0.1, 0.75≤α<1, 0≤β<0.2, 0<γ<0.25, 0<v≤0.05, 0<µ≤0.05, 0≤λ≤0.05, 0<σ≤0,1, 1+a+α+β+γ+ν+µ+λ=2, X is Nb or Ti,M is selected from at least one of Mg, Ti, Zr, Zn, Ca, B, Ce and Cr, and the cathode material has an α-NaFeO₂ layered structure and is assigned to an R-3m space group.

The cathode material according to the embodiment of the present disclosure is monocrystal particle, and then the interfacial stress in crystal can be eliminated fundamentally, so as to become one of most potential cathode materials which are high in energy density and long in cycle life. The cathode material is jointly modified by anions and kations. As oxygen ions are partially replaced by fluorine ions and kations such as aluminum ions, niobium ions or titanium ions and M ions (selected from at least one of Mg, Ti, Zr, Zn, Ca, B, Ce and Cr) are introduced simultaneously, strengths of chemical bonds in the material are further enhanced, and therefore, the safety performance is improved. Through a test, the cathode material has advantages in rate data under a large current, and high power performance of a power lithium ion battery can be realized.

Further, 0.02≤a≤0.08, 0.80≤α≤0.90, 0.05≤β≤0.1, 0.01≤γ≤0.0.05, 0.01≤ν≤0.03, 0.01≤µ≤0.03, 0≤λ≤0.02, 0.01≤σ≤0.05.

In addition, the cathode material according to the embodiment of the present disclosure further can have the following additional technical features:
In some embodiments of the present disclosure, the cathode material has a particle size of 0.5-14µm, preferably, 2-10µm.

In another aspect of the present disclosure, the present disclosure provides a method for preparing the cathode material. According to the embodiment of the present disclosure, the method includes: mixing and grinding a cathode precursor material with a lithium salt to obtain a first mixed material; placing the first mixed material under a calcining atmosphere for a first calcining to obtain a first calcined material; grinding the first calcined material, and then mixing the first calcined material with the lithium salt and a fluorine ion modifier after,so as to obtain a second mixed material; and placing the second mixed material under the calcining atmosphere for a second calcining to obtain the cathode material.

According to the method for preparing the cathode material according to the embodiments of the present disclosure, the whole process can achieve preparation of the cathode material by mixing, grinding and calcining only, such that the method can be suitable for large-scaled material production. In the preparation process, kation and fluorine modifiers can be selected flexibly according to different precursor materials of the cathode and the calcining step can be adjusted according to the specific type of the kation and fluorine modifiers selected so as to obtain the monocrystal cathode material modified by kations and anions simultaneously.

In addition, the method for preparing the cathode material according to the embodiments of the present disclosure further can have the following additional technical characteristics:
In some embodiments of the present disclosure, the cathode precursor material is Ni_{α}Cο_{β}Mη_{γ}Al_{ν}X_{µ}M_{λ}(OH)₂ wherein 0.75≤α<1, 0≤β<0.2, 0<γ<0.25, 0<v≤0.05, 0<µ≤0.05, 0≤λ≤0.05, X is Nb or Ti, and M is selected from at least one of Mg, Ti, Zr, Zn, Ca, B, Ce and Cr.

Further, 0.80≤α≤0.90, 0.05≤β≤0.1, 0.01≤γ≤0.0.05, 0.01≤ν≤0.03, 0.01≤µ≤0.03, 0≤λ≤0.02.

In some embodiments of the present disclosure, the lithium salt is selected from at least one of LiOH•H₂O, Li₂CO₃, Li₃PO₄, Li₂HPO₄, LiH₂PO₄, LiNO₃ and LiF.

In some embodiments of the present disclosure, the calcining atmosphere is a mixed atmosphere containing oxygen and an inert gas.

In some embodiments of the present disclosure, the first calcining has a temperature ranging from 750 to 950°C and a time of 10-24h.

In some embodiments of the present disclosure, the fluorine modifier is selected from at least one of LiF, NH₄F, AlF₃, TiF₄, TiF₃, MgF₂ and ZrF₂.

In some embodiments of the present disclosure, the second calcining has a temperature ranging from 700 to 900°C and a time of 8-20h.

In some embodiments of the present disclosure, the cathode precursor material is Ni_{α}Co_{β}Mn_{γ}Al_{ν}(OH)₂, wherein 0.75≤α<1, 0≤β<0.2, 0<γ<0.25, 0<ν≤0.05, preferably, 0.80≤α≤0.90, 0.05≤β≤0.1, 0.01≤γ≤0.0.05, 0.01≤ν≤0.03.

In some embodiments of the present disclosure, when the cathode precursor material is Ni_{α}Co_{β}Mn_{γ}Al_{ν}(OH)₂, the second mixture is placed under the calcined atmosphere for second calcining to obtain the second calcined material, and the method further includes: mixing and grinding the second calcined material with the niobium ion modifier or the titanium ion modifier so as to obtain a third mixed material; and placing the third mixture under the calcined atmosphere for third calcining so as to obtain the cathode material.

In some embodiments of the present disclosure, the niobium ion modifier is selected from at least one of LiNbO₃, Nb₂O₅, C₂H₆NbO and NbF₅.

In some embodiments of the present disclosure, the titanium ion modifier is selected from at least one of Ti{OCH(CH₃)₂}₄, TiO₂, TiF₄ and Li₄Ti₅O₁₂.

In some embodiments of the present disclosure, the third calcining has a temperature ranging from 500 to 900°C and a time of 6-20h.

In another aspect of the present disclosure, the present disclosure provides a lithium ion battery. According to the lithium ion battery, the lithium ion battery has the cathode material or the cathode material prepared by the method for preparing the cathode material. As the lithium ion battery according to the embodiments of the present disclosure has the cathode material, the cathode material is monocrystal particle, and then the interfacial stress in crystal can be eliminated fundamentally, so as to become one of most potential cathode materials which are high in energy density and long in cycle life. The cathode material is jointly modified by anions and kations. As oxygen ions are partially replaced by fluorine ions and kations such as aluminum ions, niobium ions or titanium ions and M ions (selected from at least one of Mg, Ti, Zr, Zn, Ca, B, Ce and Cr) are introduced simultaneously, strengths of chemical bonds in the material are further enhanced, and therefore, the safety performance is improved. Through a test, the cathode material has advantages in rate data under a large current, and high power performance of a power lithium ion battery can be realized.

In the fourth aspect of the present disclosure, the present disclosure provides an automobile. According to the embodiment of the present disclosure, the automobile has the lithium ion battery. As the automobile according to the embodiments of the present disclosure has the lithium ion battery including the cathode material, the rate data of the lithium ion battery at a high current has an advantage under performance of high energy density, long cycle life and strong chemical bond of the cathode material, has high power performance and is high in safety, such that the automobile can achieve a long endurance purpose safely.

The additional aspects and advantages of the present disclosure will be set forth in part in the description which follows, and will be known from the practice of the present disclosure.

### Brief Description of the Drawings

The above and/or additional aspects and advantages of the present disclosure will become apparent and readily understood with combination of the following drawings, in which:
Fig. 1 is a method flow schematic diagram of preparing the monocrystal cathode material according to an embodiment of the present disclosure;
Fig. 2 is a method flow schematic diagram of preparing the monocrystal cathode material according to another embodiment of the present disclosure;
FIG. 3 is an SEM diagram of the cathode material obtained in the embodiment 1;
Fig. 4 is an X-ray diffraction pattern of the cathode material obtained in the embodiments 1-4;
Fig. 5 is a first-time charging and discharging curve of a button cell prepared from the cathode material obtained in the embodiments 1-4;
Fig. 6 is a specific discharge capacity of the cathode material obtained in the embodiments 1-4 under different rates;
Fig. 7 is a cyclic capacity retention ratio of the cathode material obtained in the embodiments 1-4 at a current density of 0.5C/1C;
FIG. 8 is an SEM diagram of the cathode material obtained in the embodiment 2;
FIG. 9 is an SEM diagram of the cathode material obtained in the embodiment 3;
FIG. 10 is an SEM diagram of the cathode material obtained in the embodiment 4.

### Detailed Description of the Embodiments

Detail description on the embodiments of the present disclosure is made, and examples of the embodiments are illustrated in the drawings, wherein same or similar marks from all the way refer to same or similar components or components with same or similar functions. The embodiments described below in conjunction with the drawings are illustrative, i.e., the embodiments are intended to illustrate the present disclosure, but not to limit the present disclosure.

In addition, terms 'first' and 'second' are only used for a description purpose rather than being construed to indicate or imply relative importance or implicitly indicate the quantity of indicated technical features. Thus, features defined with "first", "second" may include at least one such feature, either explicitly or implicitly.

In one aspect of the present disclosure, the present disclosure provides a cathode material. According to the embodiment of the present disclosure, the cathode material has a general formula of Liᵢ₊ₐNi_{α}Co_{β}Mn_{γ}Al_{ν}X_{µ}M_{λ}O_{2-σ}F_{σ}, wherein 0≤a≤0.1, 0.75≤α<1, 0≤β<0.2, 0<γ<0.25, 0<v≤0.05, 0<µ≤0.05, 0≤λ≤0.05, 0<σ≤0.1, 1+a+α+β+γ+ν+µ+λ=2, X is Nb or Ti, M is selected from at least one of Mg, Ti, Zr, Zn, Ca, B, Ce and Cr, and the cathode material has an α-NaFeO₂ layered structure and is assigned to an R-3m space group. It is found by the inventor that the cathode material is monocrystal particle, and then the interfacial stress in crystal can be eliminated fundamentally, so as to become one of most potential cathode materials which are high in energy density and long in cycle life. The cathode material is jointly modified by anions and kations. As oxygen ions are partially replaced by fluorine ions and kations such as aluminum ions, niobium ions or titanium ions and M ions (selected from at least one of Mg, Ti, Zr, Zn, Ca, B, Ce and Cr) are introduced simultaneously, strengths of chemical bonds in the material are further enhanced, and therefore, the safety performance is improved.

Preferably, 0.02≤a≤0.08, 0.80≤α≤0.90, 0.05≤β≤0.1, 0.01≤γ≤0.0.05, 0.01≤ν≤0.03, 0.01≤µ≤0.03, 0≤k≤0.02, 0.01≤σ≤0.05.

Further, a can be 0/0.02/0.04/0.06/0.08/0.1, α can be 0.75/0.80/0.85/0.90/0.95/0.99, β can be 0/0.05/0.1/0.15/0.19, γ can be 0.01/0.05/0.10/0.15/0.20/0.24, v can be 0.01/0.02/0.0.3/0.04/0.05, µ can be 0.01/0.02/0.03/0.04/0.05, λ can be 0/0.01/0.02/0.03/0.04/0.05, σ can be 0.02/0.04/0.06/0.08/0.1 and 1+a+α+β+γ+ν+µ+λ=2. It is found by the inventor that the numerical value of a may affect the quantity of lithium ions embedded in and out; α, β and γ may affect the electrochemical activity of the cathode material and the structural stability of the cathode material; v, µ, λ and σ may affect the stability of the crystal structure of the material, and a, α, β, γ, ν, µ, λ and σ are within corresponding ranges of the application, such that the cathode material has a preferred electrochemical activity, and is stable in crystal structure, and meanwhile, the lithium ions are prevented from being embedded in and out. Further, the particle size of the cathode material can be 0.5-14µm, for example, 0.5/2/4/6/8/10/12/14µm, preferably 2-10µm.It is found by the inventor that greater or smaller particle size of the cathode material may affect the specific surface area, the compaction density and the rate capacity of the cathode material and the current direct resistance of the battery.

The cathode material according to the embodiment of the present disclosure is monocrystal particle, and then the interfacial stress in crystal can be eliminated fundamentally, so as to become one of most potential cathode materials which are high in energy density and long in cycle life. The cathode material is jointly modified by anions and kations. As oxygen ions are partially replaced by fluorine ions and kations such as aluminum ions, niobium ions or titanium ions and M ions (selected from at least one of Mg, Ti, Zr, Zn, Ca, B, Ce and Cr) are introduced simultaneously, strengths of chemical bonds in the material are further enhanced, and therefore, the safety performance is improved. Through a test, the anode material has advantages in rate data under a large current, and high power performance of a power lithium ion battery can be realized.

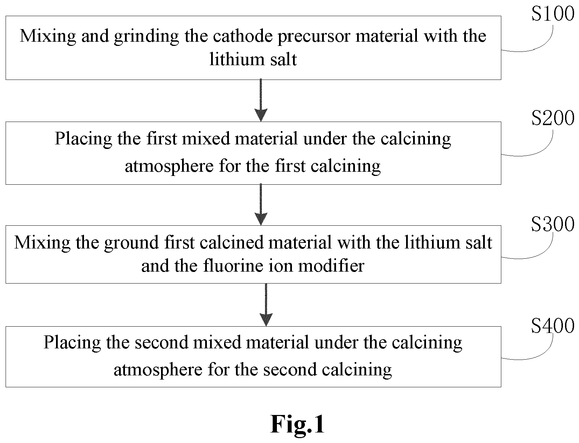

In another aspect of the present disclosure, the present disclosure provides a method for preparing the cathode material. According to the embodiment of the present disclosure, with reference to Fig. 1, the method includes:
S100: a cathode precursor material is mixed with a lithium salt to be ground to obtain a first mixed material,
   wherein in the step, an cathode precursor material is mixed with a lithium salt to be ground to obtain a first mixed material. The cathode precursor material and the lithium salt are mixed more fully and uniformly by mixing and grinding. According to an embodiment of the present disclosure, the specific type of the cathode precursor material is not limited particularly and can be selected by those skilled in the art according to an actual need, for example, Ni_{α}Cο_{β}Mη_{γ}Al_{ν}X_{µ}M_{λ}(OH)₂, wherein α<1, 0≤β<0.2, 0<γ<0.25, 0<ν≤0.05, 0<µ≤0.05, 0≤λ≤0.05, M is selected from at least one of Mg, Ti, Zr, Zn, Ca, B, Ce and Cr; preferably, 0.80≤α≤0.90, 0.05≤β≤0.1, 0.01≤γ≤0.0.05, 0.01≤ν≤0.03, 0.01≤µ≤0.03, 0≤λ≤0.02; or Ni_{α}Cο_{β}Mη_{γ}Al_{ν}(OH)₂, wherein 0.75≤α<1, 0≤β<0.2, 0<γ<0.25, 0<ν≤0.05, preferably, 0.80≤α≤0.90, 0.05≤β≤0.1, 0.01≤γ≤0.0.05, 0.01≤ν≤0.03. It is found by the inventor that corresponding preparation processes can be selected according to the specific type of the cathode precursor material, the fluorine ion modifier, the kations modifier and the like, such that the preparation method is high in flexibility, high in adaptability and suitable for scaled production. According to another embodiment of the present disclosure, the specific type of the lithium salt is not limited particularly and can be selected by those skilled in the art according to the actual need, for example, the lithium salt can be selected from at least one of LiOH•H₂O, Li₂CO₃, Li₃PO₄, Li₂HPO₄, LiH₂PO₄, LiNO₃ and LiF. According to yet another embodiment of the present disclosure, the mass ratio of the cathode precursor material to the lithium salt is not limited particularly and can be selected by those skilled in the art according to the general formula of the cathode material needed to be prepared. It should be noted that too high or too low mass ratio of the cathode precursor material to the lithium salt will affect composition and content of lithium and transitional metals in the cathode material directly.
S200: the first mixed material is placed under a calcining atmosphere for a first calcining to obtain a first calcined material;

In the step, the first mixed material is placed under a calcining atmosphere for a first calcining to obtain a first calcined material. It is found by the inventor that the first calcining of the first mixture including the cathode precursor material and the lithium salt can obtain the expected crystal structure, such that the first calcined material has a proper laminar structure, a controllable crystal defect and a lower lithium and nickel mixed arranging degree. According to one embodiment of the present disclosure, the specific type of the calcining atmosphere is not limited particularly and can be selected by those skilled in the art according to the actual need, for example, the calcining atmosphere can be a mixed atmosphere including oxygen and an inert gas. Further, the volume ratio of oxygen to inert gas in the calcining atmosphere is not limited particularly, the calcining atmosphere can be a pure oxygen atmosphere or a pure inert gas atmosphere, such as a pure nitrogen or a pure argon atmosphere or a mixed atmosphere by mixing oxygen and inert gas in any volume ratio. It is found by the inventor that the oxygen content in the calcining atmosphere plays a role of regulating the valence state of the transitional metal ions in the calcining process of the cathode precursor material and the lithium salt and affecting the shape of the cathode material particle. The oxygen content is high, which may facilitate formation of the crystal structure of the cathode material, but also adversely affects monocrystallization of the particle. According to yet another embodiment of the present disclosure, a specific condition of the first calcining is not limited particularly and can be selected by those skilled in the art according to the actual need. For example, the temperature of first calcining ranges from 750 to 950°C and can be 750/800/850/900/950°C, and the time can be 10-24h , for example, 10/12/14/16/18/20/22/24h. It is found by the inventor that the temperature of the first calcining is an important factor which affects a solid phase reaction between the cathode precursor material and the lithium salt. Neither the higher or lower the temperature is, the better the effect is, nor the longer or shorter the time is, the better the effect is. But the temperature and time of the first calcining can be combined to a certain extent, for example, a higher first calcining temperature+a shorter calcining time or a lower first calcining temperature+a longer calcining time. In order to ensure that metal elements in the cathode precursor material enter loci of the crystal structure of the cathode material to reduce formation of miscellaneous phases and crystals, when different cathode precursor materials are selected, it is needed to adjust the calcining condition, for example, when the cathode precursor material is Ni_{α}Co_{β}Mn_{γ}Al_{ν}(OH)₂, calcining for three times can be performed and when the cathode precursor material is Ni_{α}Cο_{β}Mη_{γ}Al_{ν}X_{µ}M_{λ}(OH)₂, calcining for two times can be performed.

S300: the first calcined material is ground, and then the first calcined material is mixed with the lithium salt and a fluorine ion modifier, so as to obtain a second mixed material,
wherein in the step, the first calcined material is ground, and then the first calcined material is mixed with the lithium salt and a fluorine ion modifier, so as to obtain a second mixed material. Thus, it is favorable to mix the first calcined material with the lithium salt and the fluorine ion modifier uniformly. According to one embodiment of the present disclosure, the specific types of the lithium salt and the fluorine modifier are not limited particularly and can be selected by those skilled in the art according to the actual need, for example, the lithium salt can be selected from at least one of LiOH•H₂O, Li₂CO₃, Li₃PO₄, Li₂HPO₄, LiH₂PO₄, LiNO₃ and LiF, and the fluorine modifier can be selected from at least one of LiF, NH₄F, AlF₃, TiF₄, TiF₃, MgF₂ and ZrF₂. It should be noted that the specific type of the lithium salt in the S300 and S100 can be consistent or inconstant and can be selected by those skilled in the art according to the actual need. Further, the mass ratio of the first calcined material to the lithium salt and the fluorine ion modifier is not limited particularly and can be selected by those skilled in the art according to the actual need, for example, can be selected according to the general formula of the final cathode material needed. It is found by the inventor that different mass ratios aim to meet the demand on the content range of corresponding elements in the general formula of the cathode material. The contents of elements are dependent on electrochemical or chemical and physical and chemical actions of the elements. For example, fluorine ions aim to enhance the structural stability of the cathode material. But if the content is high, more oxygen vacancies are generated and if the content is very low, the stability is limited.

S400: the second mixed material is placed under the calcining atmosphere for a second calcining to obtain the cathode material,
wherein the second mixed material is placed under the calcining atmosphere for second calcining and when the cathode precursor material is Ni_{α}Cο_{β}Mη_{γ}Al_{ν}X_{µ}M_{λ}(OH)₂, the cathode material can be obtained. It is found by the inventor that the calcining principle herein is to optimize content or distribution of lithium ions in the cathode material and enter into the crystal structures to replace oxygen ions by the fluorine ions. In the second calcining process, influence is not obvious if different cathode precursor materials are used. According to one embodiment of the present disclosure, a specific condition of the second calcining is not limited particularly and can be selected by those skilled in the art according to the actual need. For example, the temperature of second calcining ranges from 700 to 900°C and can be 700/750/800/850/900°C, and the time can be 8-20h, for example, 8/12/16/20h.It is found by the inventor that the second calcining temperature and time are dependent on properties of the lithium salt and a dopant, for example, particle size, melting point and the like. The temperature is too high and the time is too long, which may affect the crystal structure of the material. The temperature is too low and the time is to short, which may cannot reach a thrust, through which the lithium ions or the fluorine ions enter lattices. According to yet another embodiment of the present disclosure, the specific type of the calcining atmosphere is not limited particularly and can be selected by those skilled in the art according to the actual need, for example, the calcining atmosphere can be a mixed atmosphere including oxygen and an inert gas. Further, the volume ratio of oxygen to inert gas in the calcining atmosphere is not limited particularly, the calcining atmosphere can be a pure oxygen atmosphere or a pure inert gas atmosphere, such as a pure nitrogen or a pure argon atmosphere or a mixed atmosphere by mixing oxygen and inert gas in any volume ratio. It is found by the inventor that the oxygen content in the calcining atmosphere plays a role of regulating the valence state of the transitional metal ions in the calcining process of the second mixed material and affecting the shape of the cathode material particle. The oxygen content is high, which may facilitate formation of the crystal structure of the cathode material, but also adversely affects monocrystallization of the particle. It should be noted that the calcining atmosphere during second calcining can be either consistent with that during first calcining or not and can be selected by those skilled in the art according to the actual need.

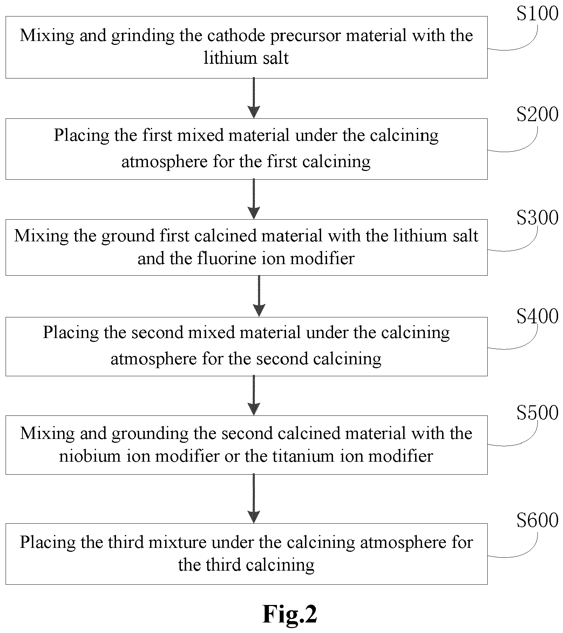

According to the embodiment of the present disclosure, with reference to Fig. 2, when the cathode precursor material is Ni_{α}Cο_{β}Mη_{γ}Al_{ν}(OH)₂, placing the second mixed material under the calcining atmosphere for the second calcining to obtain the second calcined material, the method further including:
S500: the second calcined material is mixed with a niobium ion modifier or a titanium ion modifier to obtain a third mixed material,
   wherein the second calcined material is mixed with a niobium ion modifier or a titanium ion modifier to obtain a third mixed material. It is found by the inventor that mixing and grinding the second calcined material with the niobium ion modifier or the titanium ion modifier facilitates full and uniform mixing of the materials, thereby, it is favorable for niobium ions or titanium ions in the next calcining process to enter loci of transitional metal kations in the crystal structure. According to one embodiment of the present disclosure, the specific types of the niobium ion modifier or the titanium ion modifier are not limited particularly and can be selected by those skilled in the art according to the actual need, for example, the niobium ion modifier can be selected from at least one of LiNbO₃, Nb₂O₅, C₂H₆NbO and NbF₅, and the titanium ion modifier can be selected from at least one of Ti{OCH(CH₃)₂}₄, TiO₂, TiF₄ and Li₄Ti₅O₁₂.Further, the mass ratio of the second calcined material to the niobium ion modifier or the titanium ion modifier is not limited particularly and can be selected by those skilled in the art according to the actual need, for example, can be selected according to the general formula of the cathode material needed. It is found by the inventor that different mass ratios aim to meet the demand on the content range of corresponding elements in the general formula. The contents of elements are dependent on electrochemical or chemical and physical and chemical actions of the elements. For example, the niobium ions or the fluorine ions aim to enhance the structural stability of the cathode material and inhibit nickel ions to enter the lithium loci of the lithium layer. But if the content is high, the electrochemical activity of the cathode material may be reduced and if the content is very low, the stability is limited.
S600: the third mixed material is placed under the calcining atmosphere for third calcining to obtain the cathode material,
   wherein the third mixed material is placed under the calcining atmosphere for the third calcining to obtain the cathode material. It is found by the inventor that the third calcining can improve a reaction condition of transferring the titanium ions or the niobium ions to the transition metal ion loci in the crystal structure, such that the titanium ions or the niobium ions can be diffused to the crystal phase uniformly to the maximum extent. According to one embodiment of the present disclosure, the specific type of the calcining atmosphere is not limited particularly and can be selected by those skilled in the art according to the actual need, for example, the calcining atmosphere can be a mixed atmosphere including oxygen and an inert gas. Further, the volume ratio of oxygen to inert gas in the calcining atmosphere is not limited particularly, the calcining atmosphere can be a pure oxygen atmosphere or a pure inert gas atmosphere, such as a pure nitrogen or a pure argon atmosphere or a mixed atmosphere by mixing oxygen and inert gas in any volume ratio. It is found by the inventor that the calcining atmosphere helps transfer of the ions in a high-temperature solid phase reaction and helps the titanium ions or the niobium ions be transferred to the transition metal ion loci in the crystal structure, and meanwhile, the calcining atmosphere and the calcining temperature are of a synergistic effect, but the calcining temperature plays a more important role. It should be noted that the calcining atmosphere during third calcining can be either consistent with that during first and/or second calcining or not and can be selected by those skilled in the art according to the actual need. According to yet another embodiment of the present disclosure, a specific condition of the third calcining is not limited particularly and can be selected by those skilled in the art according to the actual need. For example, the temperature of third calcining ranges from 500 to 900°C and can be 500/600/700/800/900°C, and the time can be 6-20h , for example, 6/8/10/12/14/16/18/20h.It is found by the inventor that the temperature is too high and the time is too long, which may cause transfer of the transition metal ions and arrangement of the kations in the original crystal structure to affect the crystal structure and may cause re-growth of monocrystal particles and local pulverization on the surfaces of the particles. The temperature is too low or the time is too short, which may prevent the titanium ions or the niobium ions from entering the particles to be uniformly distributed in the bulk phase well.

According to the method for preparing the cathode material according to the embodiments of the present disclosure, the whole process can achieve preparation of the cathode material by mixing, grinding and calcining only, such that the method can be suitable for large-scaled material production. In the preparation process, kation and fluorine modifiers can be selected flexibly according to different precursor materials of the cathode and the calcining step can be adjusted according to the specific type of the kation and fluorine modifiers selected so as to obtain the monocrystal cathode material modified by kations and anions simultaneously.

In another aspect of the present disclosure, the present disclosure provides a lithium ion battery. According to the lithium ion battery, the lithium ion battery has the cathode material or the cathode material prepared by the method for preparing the cathode material. As the lithium ion battery according to the embodiments of the present disclosure has the cathode material, the cathode material is monocrystal particle, and then the interfacial stress in crystal can be eliminated fundamentally, so as to become one of most potential cathode materials which are high in energy density and long in cycle life. The cathode material is jointly modified by anions and kations. As oxygen ions are partially replaced by fluorine ions and kations such as aluminum ions, niobium ions or titanium ions and M ions (selected from at least one of Mg, Ti, Zr, Zn, Ca, B, Ce and Cr) are introduced simultaneously, strengths of chemical bonds in the material are further enhanced. Through a test, the anode material has advantages in rate data under a large current, and high power performance of a power lithium ion battery can be realized.

In the fourth aspect of the present disclosure, the present disclosure provides an automobile. According to the embodiment of the present disclosure, the automobile has the lithium ion battery. As the automobile according to the embodiments of the present disclosure has the lithium ion battery including the cathode material, the rate data of the lithium ion battery at a high current has an advantage under performance of high energy density, long cycle life and strong chemical bond of the cathode material, has high power performance and is high in safety, such that the automobile can achieve a long endurance purpose safely.

Description on the present disclosure is made below with reference to specific embodiments. It should be noted that the embodiments are merely illustrative and are not to limit the present disclosure in any form.

In the embodiments and comparative examples below, the method for testing the first time charge-discharge, the specific discharge capacity and the cyclic capacity retention ratio of each cathode material is as follows: a test schedule of first time charge-discharge is as follows: a voltage window is 3.0-4.3V and the charge-discharge rate is 0.1 C; the cyclic retention rate is 0.5C during charging and is 1 C during discharging, and the voltage window is 3.0-4.3V

### Example 1

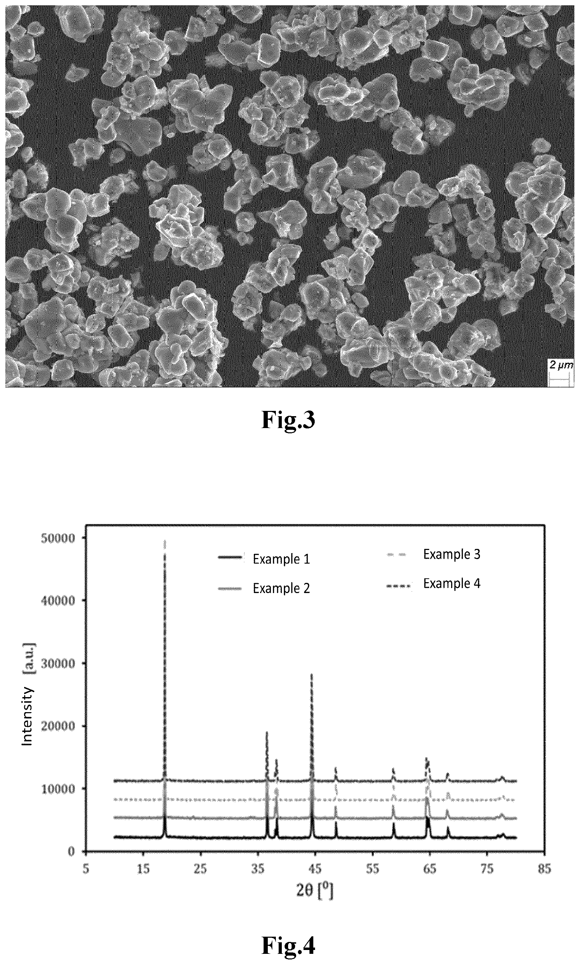

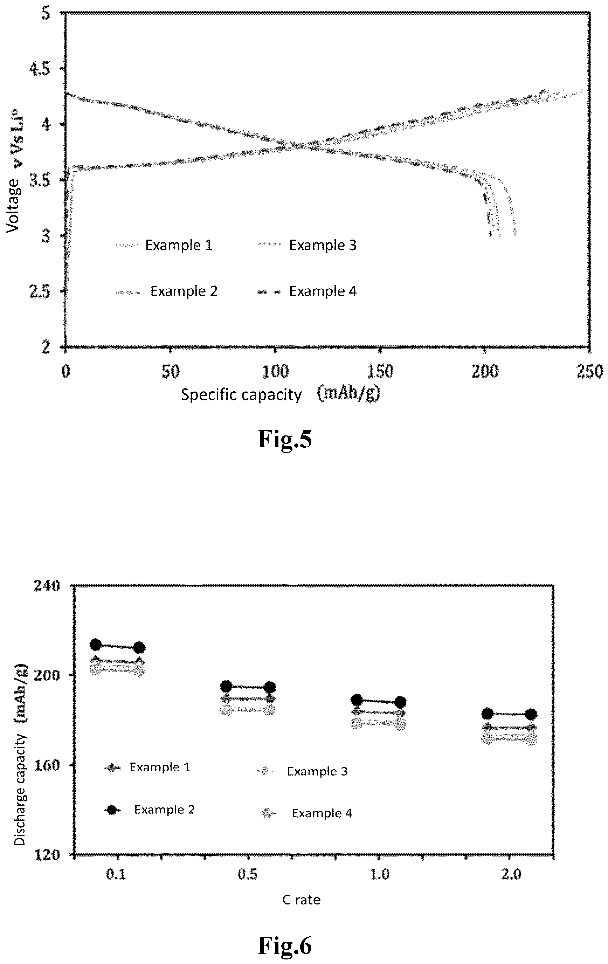

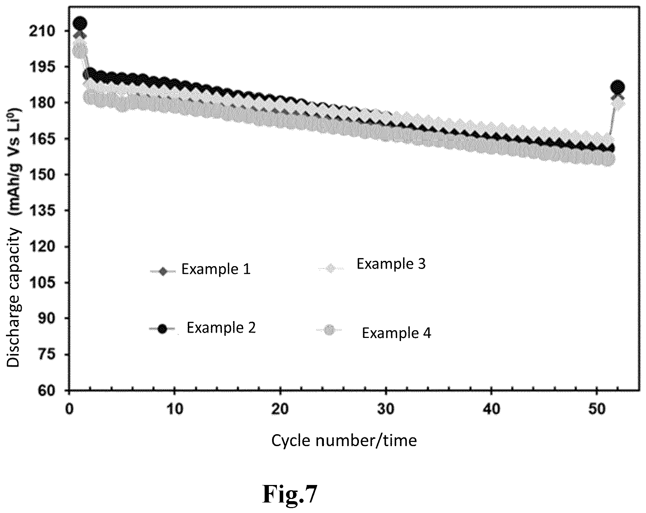

1mol of Ni_{0.88}Co_{0.06}Mn_{0.03}Al_{0.02}Nb_{0.01}(OH)₂ and 0.6mol of LiOH•H₂O are placed in a mill to be ground and mixed fully to obtain a first mixed material; then the first mixed material is placed in a calcining furnace with a pure oxygen atmosphere at 950°C to be calcined for 24h to obtain a first calcined material; then the first calcined material ground is fully mixed with 0.4mol of LiOH•H₂O and 0.05mol of LiF in the mill to obtain a second mixed material; then the second mixed material is placed in a calcining furnace with a pure oxygen atmosphere at 760°C to be calcined for 15h to obtain a Li_{1.05}Ni_{0.88}Co_{0.06}Mn_{0.03}Al_{0.02}Nb_{0.01}O_{1.95}F_{0.05} cathode material. An SEM diagram of the cathode material is as shown in the Fig. 3, an X-ray diffraction pattern is as shown in the Fig. 4, the first time charging and discharging curve is as shown in the Fig. 5, the specific discharge capacity under different rates is as shown in the Fig. 6 and the cyclic capacity retention ratio at a current density of 0.5C/1C is as shown in the Fig. 7.

### Example 2

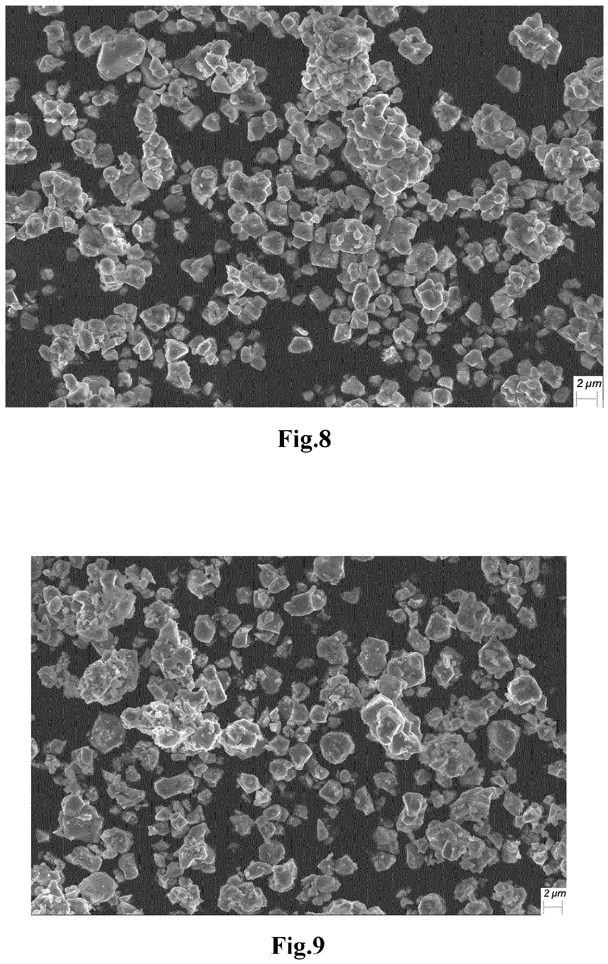

1mol of Ni_{0.88}Co_{0.06}Mn_{0.03}Al_{0.02}Nb_{0.01}(OH)₂ and 0.6mol of LiOH•H₂O are placed in a mill to be ground and mixed fully to obtain a first mixed material; then the first mixed material is placed in a calcining furnace with a pure nitrogen atmosphere at 850°C to be calcined for 10h to obtain a first calcined material; then the first calcined material ground is fully mixed with 0.4mol of LiOH•H₂O and 0.05mol of LiF in the mill to obtain a second mixed material; then the second mixed material is placed in a calcining furnace with a pure nitrogen atmosphere at 700°C to obtain a Li_{1.05}Ni_{0.88}Co_{0.06}Mn_{0.03}Al_{0.02}Ti_{0.01}O_{1.95}F_{0.05} cathode material. An SEM diagram of the cathode material is as shown in the Fig. 8, an X-ray diffraction pattern is as shown in the Fig. 4, the first time charging and discharging curve is as shown in the Fig. 5, the specific discharge capacity under different rates is as shown in the Fig. 6 and the cyclic capacity retention ratio at a current density of 0.5C/1C is as shown in the Fig. 7.

### Example 3

1mol of Ni_{0.88}Co_{0.06}Mn_{0.03}Al_{0.02} (OH)₂ and 0.6mol of LiOH•H₂O are placed in a mill to be ground and mixed fully to obtain a first mixed material; then the first mixed material is placed in a calcining furnace with a pure oxygen atmosphere at 900°C to be calcined for 18h to obtain a first calcined material; then the first calcined material ground is fully mixed with 0.39mol of LiOH•H₂O and 0.05mol of LiF in the mill to obtain a second mixed material; then the second mixed material is placed in a calcining furnace with a pure oxygen atmosphere at 900°C to be calcined for 8h, and the calcined material is mixed with O.Olmol of LiNbO₃ fully and ground to obtain a third mixed material; and the third mixed material is placed in a pure oxygen atmosphere at 810°C to be calcined for 16h to obtain a Li_{1.05}Ni_{0.88}Co_{0.06}Mn_{0.03}Al_{0.02}Nb_{0.01}O_{1.95}F_{0.05} cathode material. An SEM diagram of the cathode material is as shown in the Fig. 9, an X-ray diffraction pattern is as shown in the Fig. 4, the first time charging and discharging curve is as shown in the Fig. 5, the specific discharge capacity under different rates is as shown in the Fig. 6 and the cyclic capacity retention ratio at a current density of 0.5C/1C is as shown in the Fig. 7.

### Example 4

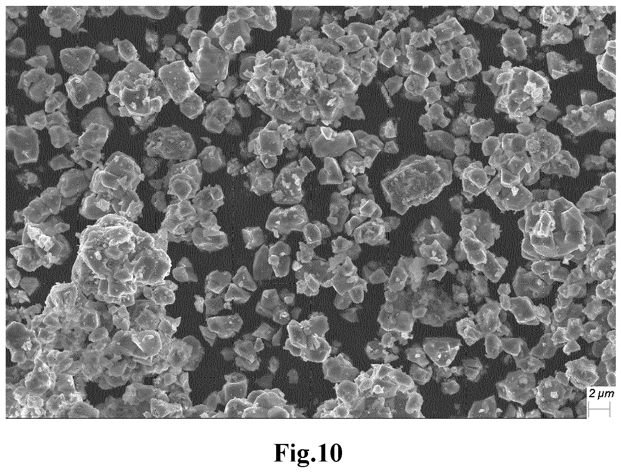

1mol of Ni_{0.88}CO_{0.06}Mn_{0.03}Al_{0.02} (OH)₂ and 0.6mol of LiOH•H₂O are placed in a mill to be ground and mixed fully to obtain a first mixed material; then the first mixed material is placed in a calcining furnace with a pure oxygen atmosphere at 950°C to be calcined for 24h to obtain a first calcined material; then the first calcined material ground is fully mixed with 0.4mol of LiOH•H₂O and 0.05mol of LiF in the mill to obtain a second mixed material; then the second mixed material is placed in a calcining furnace with a pure oxygen atmosphere at 760°C to be calcined for 15h, and the calcined material is mixed with O.Olmol of Ti{OCH(CH₃)₂}₄ fully and ground to obtain a third mixed material; and the third mixed material is placed in a pure oxygen atmosphere at 800°C to be calcined for 14h to obtain a Li_{1.05}Ni_{0.88}Co_{0.06}Mn_{0.03}Al_{0.02}Ti_{0.01}O_{1.95}F_{0.05} cathode material. An SEM diagram of the cathode material is as shown in the Fig. 10, an X-ray diffraction pattern is as shown in the Fig. 4, the first time charging and discharging curve is as shown in the Fig. 5, the specific discharge capacity under different rates is as shown in the Fig. 6 and the cyclic capacity retention ratio at a current density of 0.5C/1C is as shown in the Fig. 7.

Conclusion: it can be know from the Figs. 3, 8, 9 and 10 that the cathode materials obtained in the embodiments 1-4 are monocrystal particles without polycrystalline particles; it can be known from the Fig. 4 that the cathode materials obtained in the embodiments 1-4 formα-NaFeO₂ laminar structures, affiliated to R-3m space groups without other miscellaneous crystals; it can be known from the Fig. 5 that the cathode materials obtained in the embodiments 1-4 are prepared into button cells, the specific discharge capacities of which are greater than 200 mAh/g and the first coulombic efficiencies of which are greater than 86%; it can be known from the Fig. 6 that the cathode materials obtained in the embodiments 1-4 have good charge/discharge performance of large current density, wherein the highest specific discharge capacity corresponding to rate 1C reaches 189mAh/g; and it can be known from the Fig. 7 that the cyclic capacity retention ratios of the cathode materials obtained in the embodiments 1-4 at the current density of 0.5C/1C reach up to 88% after 50 charge/discharge cycles.

### Example 5

1mol of Ni_{0.88}Co_{0.06}Mn_{0.03}Al_{0.02}Nb_{0.01}(OH)₂ and 0.6mol of LiOH•H₂O are placed in a mill to be ground and mixed fully to obtain a first mixed material; then the first mixed material is placed in a calcining furnace with a pure oxygen atmosphere at 950°C to be calcined for 24h to obtain a first calcined material; then the first calcined material ground is fully mixed with 0.4mol of LiOH•H₂O and O.Olmol of LiF in the mill to obtain a second mixed material; then the second mixed material is placed in a calcining furnace with a pure oxygen atmosphere at 760°C to be calcined for 15h to obtain a Li_{1.05}Ni_{0.88}Co_{0.06}Mn_{0.03}Al_{0.02}Nb_{0.01}O_{1.99}F_{0.01} cathode material.

### Example 6

1mol of Ni_{0.88}Co_{0.06}Mn_{0.03}Al_{0.02}Nb_{0.01}(OH)₂ and 0.6mol of LiOH•H₂O are placed in a mill to be ground and mixed fully to obtain a first mixed material; then the first mixed material is placed in a calcining furnace with a pure oxygen atmosphere at 950°C to be calcined for 24h to obtain a first calcined material; then the first calcined material ground is fully mixed with 0.4mol of LiOH•H₂O and 0.05mol of NH4F in the mill to obtain a second mixed material; then the second mixed material is placed in a calcining furnace with a pure oxygen atmosphere at 760°C to be calcined for 15h to obtain a Li_{1.00}Ni_{0.88}Co_{0.06}Mn_{0.03}Al_{0.02}Nb_{0.01}O_{1.95}F_{0.05} cathode material.

### Example 7

1mol of Ni_{0.88}Co_{0.06}Mn_{0.03}Al_{0.02}Nb_{0.01}(OH)₂ and 0.6mol of LiOH•H₂O are placed in a mill to be ground and mixed fully to obtain a first mixed material; then the first mixed material is placed in a calcining furnace with a pure oxygen atmosphere at 950°C to be calcined for 24h to obtain a first calcined material; then the first calcined material ground is fully mixed with 0.4mol of LiOH•H₂O and O.Olmol of AlF₃ in the mill to obtain a second mixed material; then the second mixed material is placed in a calcining furnace with a pure oxygen atmosphere at 760°C to be calcined for 15h to obtain a Li_{1.00}Ni_{0.88}Co_{0.06}Mn_{0.03}Al_{0.03}Nb_{0.01}O_{1.97}F_{0.03} cathode material.

### Example 8

1mol of Ni_{0.88}Co_{0.06}Mn_{0.03}Al_{0.02}Nb_{0.01}(OH)₂ and 0.6mol of LiOH•H₂O are placed in a mill to be ground and mixed fully to obtain a first mixed material; then the first mixed material is placed in a calcining furnace with a pure oxygen atmosphere at 950°C to be calcined for 24h to obtain a first calcined material; then the first calcined material ground is fully mixed with 0.15mol of Li₃PO₄ and 0.05mol of LiF in the mill to obtain a second mixed material; then the second mixed material is placed in a calcining furnace with a pure oxygen atmosphere at 760°C to be calcined for 15h to obtain a Li_{1.05}Ni_{0.88}Co_{0.06}Mn_{0.03}Al_{0.02}Nb_{0.01}O_{1.95}F_{0.05} cathode material.

### Example 9

1mol of Ni_{0.88}Co_{0.06}Mn_{0.03}Al_{0.02}(OH)₂ and 0.6mol of LiOH•H₂O are placed in a mill to be ground and mixed fully to obtain a first mixed material; then the first mixed material is placed in a calcining furnace with a pure oxygen atmosphere at 950°C to be calcined for 24h to obtain a first calcined material; then the first calcined material ground is fully mixed with 0.4mol of LiOH•H₂O and 0.05mol of LiF in the mill to obtain a second mixed material; then the second mixed material is placed in a calcining furnace with a pure oxygen atmosphere at 760°C to be calcined for 15h, and the calcined material is mixed with O.Olmol of Ti{OCH(CH₃)₂}₄ fully and ground to obtain a third mixed material; and the third mixed material is placed in a pure oxygen atmosphere at 500°C to be calcined for 20h to obtain a Li_{1.05}Ni_{0.88}Co_{0.06}Mn_{0.03}Al_{0.02}Ti_{0.01}O_{1.95}F_{0.05} cathode material.

### Example 10

1mol of Ni_{0.88}Co_{0.06}Mn_{0.03}Al_{0.02}(OH)₂ and 0.6mol of LiOH•H₂O are placed in a mill to be ground and mixed fully to obtain a first mixed material; then the first mixed material is placed in a calcining furnace with a pure oxygen atmosphere at 950°C to be calcined for 24h to obtain a first calcined material; then the first calcined material ground is fully mixed with 0.4mol of LiOH•H₂O and 0.05mol of LiF in the mill to obtain a second mixed material; then the second mixed material is placed in a calcining furnace with a pure oxygen atmosphere at 760°C to be calcined for 15h, and the calcined material is mixed with O.Olmol of Ti{OCH(CH₃)₂}₄ fully and ground to obtain a third mixed material; and the third mixed material is placed in a pure oxygen atmosphere at 900°C to be calcined for 6h to obtain a Li_{1.05}Ni_{0.88}Co_{0.06}Mn_{0.03}Al_{0.02}Ti_{0.01}O_{1.95}F_{0.05} cathode material.

### Comparative Example 1

1mol of Ni_{0.88}Co_{0.06}Mn_{0.03}Al_{0.02}Nb_{0.01}(OH)₂ and 0.6mol of LiOH•H₂O are placed in a mill to be ground and mixed fully to obtain a first mixed material; then the first mixed material is placed in a calcining furnace with a pure oxygen atmosphere at 950°C to be calcined for 24h to obtain a first calcined material; then the first calcined material ground is fully mixed with 0.45mol of LiOH•H₂O in the mill to obtain a second mixed material; then the second mixed material is placed in a calcining furnace with a pure oxygen atmosphere at 760°C to be calcined for 15h to obtain a Li_{1.05}Ni_{0.88}Co_{0.06}Mn_{0.03}Al_{0.02}Nb_{0.01}O₂ cathode material.

The first charge-discharge numerical values and the 50-times capacity retention ratios of the cathode materials at the current density of 0.5C/1C of the examples 5 to 10 and the comparative example 1 are as shown in a table 1, and the specific discharge capacities at different rates are as shown in the Fig. 2.

**Table 1**

| | First time specific charge capacity mAh/g | First time specific discharge capacity mAh/g | 50-times cyclic capacity retention ratio |
|---|---|---|---|
| Comparative Example 1 | 193.1 | 160.0 | 82.9% |
| Example 5 | 196.2 | 163.3 | 83.2% |
| Example 6 | 203.7 | 171.5 | 84.1% |
| Example 7 | 201.0 | 173.9 | 86.5% |
| Example 8 | 204.5 | 179.1 | 87.5% |
| Example 9 | 203.6 | 181.9 | 89.3% |
| Example 10 | 202.9 | 181.4 | 89.4% |

**Table 2**

| | | Comparative Example 1 | Example 5 | Example 6 | Example 7 | Example 8 | Example 9 | Example 10 |
|---|---|---|---|---|---|---|---|---|
| 0.1C | Specific discharge capacity mAh/g | 160.1 | 163.0 | 171.4 | 173.9 | 179.0 | 181.2 | 181.3 |
| 0.5C | Specific discharge capacity mAh/g | 151.2 | 162.3 | 161.3 | 163.5 | 168.9 | 172.4 | 170.7 |
| 1C | Specific discharge capacity mAh/g | 147.0 | 156.3 | 155.2 | 158.1 | 163.1 | 168.0 | 165.8 |
| 2C | Specific discharge capacity mAh/g | 143.2 | 153.0 | 151.6 | 154.7 | 159.6 | 164.2 | 160.3 |

In the description of this specification, descriptions with reference to the terms, such as "one embodiment", "some embodiments", "examples", "specific examples", or "some examples", mean that the specific features, structures, materials or characteristics described in conjunction with the embodiments or examples are included in at least one embodiment or example of the present disclosure. In the present specification, the schematic representation of the above terms does not necessarily mean the same embodiment or example. Furthermore, the particular features, structures, materials, or characteristics described may be combined in a suitable manner in any one or more embodiments or examples. In addition, various embodiments or examples described in the specification, as well as features of various embodiments or examples, may be combined and combined by those skilled in the art without contradicting each other.

Although embodiments of the disclosure have been shown and described above, it will be understood that the above embodiments are illustrative and are not to be construed as limiting the present disclosure. Changes, modifications, alterations and variations of the above-described embodiments may be made by those skilled in the art.[K1]

## Claims

1. A cathode material, wherein the cathode material has a general formula of Li₁₊ₐNi_{α}Co_{β}Mn_{γ}Al_{ν}X_{µ}M_{λ}O_{2-σ}F_{σ}, 0≤a≤0.1, 0.75≤α<1, 0≤β<0.2, 0<γ<0.25, 0<ν≤0.05, 0<µ≤0.05, 0≤λ≤0.05, 0<σ≤0.1, and 1+a+α+β+γ+ν+µ+λ=2, X[K2] is Nb or Ti, M is selected from at least one of Mg, Ti, Zr, Zn, Ca, B, Ce and Cr, and the cathode material has an α-NaFeO₂ layered structure and is assigned to an R-3m space group.

2. The cathode material according to claim 1, wherein 0≤a≤0.08, 0.80≤α≤0.90, 0.05≤β≤0.1, 0.01≤γ≤0.0.05,[K3] 0.01≤ν≤0.03, 0.01≤µ≤0.03, 0≤λ≤0.02, 0.01≤σ≤0.05.

3. The cathode material according to claim 1, wherein a particle size of the cathode material is 0.5-14µm, preferably 2-10µm.

4. The cathode material according to claim 1, wherein the cathode material has a monocrystal structure.

5. A method for preparing the cathode material as defined in any one of claims 1-4, wherein the method comprises the following steps:
mixing and grinding an cathode precursor material with a lithium salt to obtain a first mixed material;
placing the first mixed material under a calcining atmosphere for a first calcining to obtain a first calcined material;
mixing the first calcined material with the lithium salt and a fluorine ion modifier after grinding the first calcined material, so as to obtain a second mixed material; and
placing the second mixed material under the calcining atmosphere for a second calcining to obtain the cathode material.

6. The method according to claim 5, wherein the cathode precursor material is Ni_{α}Cο_{β}Mη_{γ}Al_{ν}X_{µ}M_{λ}(OH)₂, 0.75≤α<1, 0≤β<0.2, 0<γ<0.25, 0<v≤0.05, 0<µ≤0.05, 0≤λ≤0.05, X is Nb or Ti, and M is selected from at least one of Mg, Ti, Zr, Zn, Ca, B, Ce and Cr;
preferably, 0.80≤α≤0.90, 0.05≤β≤0.1, 0.01≤γ≤0.0.05, |[K4] 0.01≤ν≤0.03, 0.01≤µ≤0.03, 0≤λ≤0.02, and
preferably, the lithium salt is selected from at least one of LiOH•H₂O, Li₂CO₃, Li₃PO₄, Li₂HPO₄, LiH₂PO₄, LiNO₃ and LiF.

7. The method according to claim 5, wherein the calcining atmosphere is a mixed atmosphere containing oxygen and an inert gas,
preferably, the first calcining has a temperature ranging from 750 to 950°C and a time of 10-24h.

8. The method according to claim 5, wherein the fluorine modifier is selected from at least one of LiF, NH₄F, AlF₃, TiF₄, TiF₃, MgF₂ and ZrF₂,
preferably, the second calcining has a temperature ranging from 700 to 900°C and a time of 8-20h.

9. The method according to claim 5, wherein the cathode precursor material is Ni_{α}Cο_{β}Mη_{γ}Al_{ν}(OH)₂, 0.75≤α<1, 0≤β<0.2, 0<γ<0.25,0<ν<0.05,preferably,0.80≤α<0.90,0.05≤β≤0.1,0.01≤γ≤0.0.05,0.01≤ν≤0.03.

10. The method according to claim 5, wherein when the cathode precursor material is Ni_{α}Co_{β}Mn_{γ}Al_{ν}(OH)₂, placing the second mixed material under the calcining atmosphere for the second calcining to obtain the second calcined material, the method further comprising:
mixing the second calcined material with a niobium ion modifier or a titanium ion modifier to obtain a third mixed material; and
placing the third mixed material under the calcining atmosphere for a third calcining to obtain the cathode material;
preferably, the niobium ion modifier is selected from at least one of LiNbO₃, Nb₂O₅, C₂H₆NbO and NbF₅;
preferably, the titanium ion modifier is selected from at least one of Ti{OCH(CH₃)₂}₄, TiO₂, TiF₄ and Li₄Ti₅O₁₂; and
preferably, the third calcining has a temperature ranging from 500 to 900°C, preferably, 800-810°C, and a time of 6-20h.

11. A lithium ion battery, wherein the lithium ion battery comprises the cathode material according to any one of claims 1-4 or the cathode material prepared by the method for preparing the cathode material according to any one of claims 5-10.

12. An automobile, wherein the automobile has the lithium ion battery according to claim 11.
